# EUROPÄISCHE PATENTSCHRIFT

(11) **EP 2 283 965 B1**
(45) Veröffentlichungstag und Bekanntmachung des Hinweises auf die Patenterteilung: **03.04.2013**
(21) Anmeldenummer: 10007869.0
(22) Anmeldetag: 28.07.2010
(51) Int. Cl.: B23P 19/06, F16B 37/06

(54) **Funktionselement, Verfahren zum Einbringen des Funktionselementes in ein Blechteil sowie Zusammenbauteil**
Functional element, method for inserting the functional element into a sheet metal component and assembly component
Elément de fonction, procédé d'introduction de l'élément de fonction dans une partie de tôle et composant d'ensemble

(30) Priorität: 13.08.2009 DE 102009037427
(43) Veröffentlichungstag der Anmeldung: 16.02.2011
(73) Patentinhaber: Profil Verbindungstechnik GmbH & Co. KG, 61381 Friedrichsdorf (DE)
(72) Erfinder: Babej, Jiri, 35423 Lich (DE)
(74) Vertreter: Manitz, Finsterwald & Partner GbR

(56) Entgegenhaltungen:
- EP-A2- 1 609 561
- WO-A1-01/03880
- WO-A1-02/053924
- WO-A1-03/029667
- DE-A1- 3 447 006
- US-A- 4 557 649

## Beschreibung

Die vorliegende Erfindung betrifft ein Funktionselement gemäß dem Oberbegriff des Anspruchs 1, insbesondere Bolzenelement, sowie ein Verfahren zum Einbringen des Funktionselements in ein Tafelelement und das daraus resultierende Zusammenbauteil.

Ein Funktionselement der eingangs genannten Art ist in Fig. 6 der PCT-Anmeldung mit der Veröffentlichungsnummer WO 01/03880 gezeigt, und zwar als Variante eines Bolzenelements, dessen Kopfteil und Schaftteil zumindest im Wesentlichen den gleichen Durchmesser aufweisen. Die entsprechende PCT-Anmeldung hat unter anderem zum EP-Patent 1202834 geführt. Ein Bolzenelement dieser Art wird von der Firma Profil Verbindungstechnik GmbH & Co. KG in Form eines so genannten Kugelbolzens vertrieben, das im EP-Patent 1 346 160 für sich beansprucht ist. Das Bolzenelement wird mit einem Tafelelement in Form eines Blechteils, wie die Heckklappe eines Fahrzeugs, im Bereich des Kopfteils vernietet, wobei das dem Kopfteil abgewandte Ende des Schaftteils mit einer Kugelform versehen ist. Das kugelförmige Ende des Schaftteils bildet dann einen Teil eines Kugelgelenks, dessen Pfanne Teil einer Gasfeder ist, die der Abstützung der Heckklappe dient.

Ein ähnliches Funktionselement ist beispielsweise aus der deutschen Patentschrift 34 47 006 bekannt und ist dort als Gewindebolzen realisiert, wobei das Kopfteil mit einem rohrförmigen Stanz- und Nietabschnitt versehen ist, der zum Durchstanzen eines Blechteils und zur anschließenden Ausbildung eines Nietbördels ausgelegt ist, wodurch das Element im Blechteil befestigt wird. Zwischen dem rohrförmigen Stanz- und Nietabschnitt weist das Kopfteil einen Flansch mit einer senkrecht zur Längsachse des Elementes stehenden Ringfläche auf, die nach dem Einbringen des Elementes in ein Blechteil üblicherweise kurz unterhalb der dem Schaftteil zugewandten Seite des Blechteils angeordnet ist.

Der beim Durchstanzen des Blechteils gebildete Stanzbutzen wird in den Stanz- und Nietabschnitt hineingedrückt und unterstützt dabei die Nietverbindung mit dem Blechteil. Die DE-PS 34 47 006 beschreibt aber auch Funktionselemente in Form von Mutterelementen, wobei das Schaftteil als Verlängerung des Kopfteils zu verstehen ist und dieses mit einem Innengewinde versehen ist. Das Schaftteil muss aber nicht als Gewinde ausgebildet sein; es kommen viele Ausbildungen in Frage, beispielsweise ein Führungszapfen oder eine stiftartige Ausbildung, an der beispielsweise Teppiche mittels entsprechenden Klammern befestigt werden können.

Solche Funktionselemente, d.h. entsprechend der DE-PS 34 47 006 C2, haben sich über mehrere Jahre bestens bewährt und ermöglichen es, eine hochwertige Verbindung zwischen dem Element und dem Blechteil zu erzeugen. Solche Elemente sind aber in der Herstellung relativ aufwendig und erfordern zum Teil die Anwendung von äußerst präzise arbeitenden Kaltschlagmaschinen, die zum Erzielen der gewünschten Qualität verhältnismäßig langsam arbeiten. Die Notwendigkeit, relativ aufwendige Kaltschlagmaschinen anzuwenden und die beschränkte Arbeitsgeschwindigkeit führen zu verhältnismäßig hohen Produktionskosten. Darüber hinaus wäre es für manche Anwendungen günstiger, wenn das Gewicht der Elemente reduziert werden könnte.

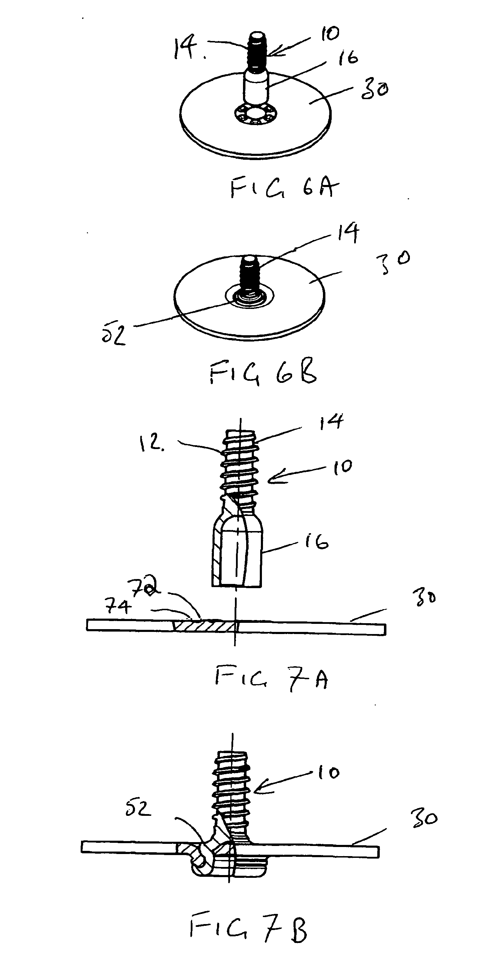

Problematisch bei einem Funktionselement gemäß Fig. 6 der

WO 01/03880 ist, dass das Element bei der Anbringung an ein Blechteil, die eine erhebliche Verformung des Kopfteils erfordert, sich in unerwünschter Weise verformt, wodurch die Güte der Anbindung leidet. Ein solcher Nachteil ist bei einer Massenfertigung, bei der tausende Funktionselemente zur Anwendung gelangen, nicht akzeptabel, und zwar selbst dann, wenn die unerwünschte Verformung nur ab und zu vorkommt, da solche Vorkommnisse, abgesehen von dem unerwünschten Ausschuss, den Produktionsablauf stören.

Der vorliegenden Erfindung liegt die Aufgabe zugrunde, ein Funktionselement der eingangs genannten Art vorzustellen, das eine hochwertige Verbindung mit dem Tafelelement ermöglicht und welches sicherstellt, dass keine unerwünschte Verformung bei der Anbringung am Tafelelement auf tritt, sondern nur die jeweils erwünschte Verformung des Kopfteils. Ferner soll eine verbesserte Verdrehsicherung auch ohne Verdrehsicherungsmerkmale sowie ein guter Auszieh- und Ausknöpfwiderstand geschaffen werden, wobei die Funktionselemente ebenfalls sehr rationell und kostengünstig herstellbar sein sollen.

Zur Lösung dieser Aufgabe wird bei einem Funktionselement der eingangs genannten Art erfindungsgemäß vorgesehen, dass
das Schaftteil über eine durch eine konvex gerundete Fläche gebildete Ringschulter in das Kopfteil übergeht, derart, dass die konvex gerundete Fläche sich vom Schaftteil bis zu der zylindrischen Mantelfläche des Kopfteils erstreckt.

Das erfindungsgemäße Funktionselement wird somit ohne ein sich radial über das Kopfteil bzw. den Nietabschnitt hinaus erstreckendes Flanschteil gefertigt, was zu der rationellen kostengünstigen Fertigung des Funktionselements beiträgt.

Bei bekannten Funktionselementen mit einem Flanschteil liegt die Funktion des Flanschteils einerseits darin, eine ausreichende Fläche zu schaf fen, die verhindert, dass das Element im Tafelelement locker wird, andererseits aber auch eine Fläche zu bilden, an der weitere Blechteile oder andere Bauteile befestigt werden können, beispielsweise, wenn es sich um ein Bolzenelement handelt, durch eine Mutter, die auf das ein Gewinde aufweisendes Schaftteil des Funktionselementes aufgeschraubt wird.

Bei den erfindungsgemäßen Funktionselementen ist dieser Flansch am Funktionselement selbst zunächst nicht vorhanden. Bei der Einbringung des Funktionselementes in das Tafelelement, (das nachfolgend Blechteil genannt ist) wird, wie bei den an sich bekannten Elementen, das Stirnende des Funktionselementes durch das Blechteil gestanzt und zu einem Nietbördel auf der dem Schaftteil des Elementes abgewandten Seite des Blechteils umgeformt. Ferner wird das Funktionselement in Längsrichtung so gestaucht, dass ein Teil des hohlen Kopfteils zu einem Ringfalz oder Ringwulst ausgebildet wird, der nunmehr als Flansch dient und die oben erläuterten Funktionen des üblichen Flansches übernimmt. Erfindungsgemäß wird, wie auch bei dem Stand der Technik gemäß Fig. 6 der WO 01/03880, zumindest das Kopfteil des Elements hohl ausgebildet und bei der Anbringung am Blechteil ebenfalls zu einem Nietbördel auf der einen Seite des Blechteils und einem Ringfalz auf der anderen des Blechteils verformt, wobei der Lochrand des Blechteils zwischen dem Nietbördel und dem Ringfalz eingeklemmt wird.

An dieser Stelle soll auf die US-A-4,557,649 verwiesen werden, die ein Mutterelement zeigt, mit einem rohrförmigen Teil und einem Mutterteil, wobei das rohrförmige Teil über eine gerundete Schulter in das Mutterteil übergeht. Das Mutterelement wird von einer Seite durch ein vorgefertigtes Loch im Blechteil mit dem Mutterteil voran eingesetzt, bis ein vorgefertigter Flansch am freien Stirnende des rohrförmigen Teils am Blechteil ansteht. Das Mutterelement ist jedoch im Gegensatz zu dem erfindungsgemäßen Funktionselement kein Nietelement, sondern stellt eine Schermutter dar. Die gerundete Schulter wird nämlich durch ein Setzwerkzeug, das gegen den Flansch des rohrförmigen Teils drückt und mittels eines Gewindedornes an das Mutterteil zieht, durchschert und das eine konusförmige Außenseite aufweisende Mutterteil wird zunehmend in das rohrförmige Teil geklemmt, um das Mutterelement am Blechteil zu befestigen.

Dadurch, dass bei dem erfindungsgemäßen Element der Außendurchmesser des Kopfteils größer ist als der des Schaftteils, weisen der entstehende Ringfalz und das entstehende Nietbördel ebenfalls größere Durchmesser auf als vergleichbare Elemente, bei denen das Kopfteil und das Schaftteil den gleichen Durchmesser aufweisen. Durch die abgerundete Form des Übergangs vom Schaftteil in das Kopfteil wird die Länge des zylindrischen Bereichs des Kopfteils gegenüber der Ausführung nach Fig. 6 gemäß WO O1/03880 verkürzt, wodurch dessen kontrollierte Verformbarkeit verbessert wird. Die axiale Höhe des gerundeten Übergangs trägt somit zur Gesamtlänge des Kopfteils bei.

Durch den vergrößerten Durchmesser des Ringfalzes und des Nietbördels wird allein durch Lochlaibung ein höherer Verdrehwiderstand erreicht. Ferner wird durch den vergrößerten Durchmesser ein deutlich höherer Auszieh- und Ausknöpfwiderstand erreicht.

Durch die besondere Formgebung des Übergangs zwischen dem Schaftteil und dem Kopfteil, d.h. durch die konvex gerundete Fläche, die sich vom Schaftteil bis zu der zumindest im Wesentlichen zylindrischen Mantelfläche des Kopfteils erstreckt, gelingt es in überraschender Weise unerwünschte Verformungen des Funktionselements bzw. des Blechteils bei der Anbringung des Funktionselements an das Blechteil weitestgehend zu vermeiden.

Die konvex gerundete Fläche ist vorzugsweise zumindest im Wesentlichen eine sphärisch gerundete Fläche. Darüber hinaus ist der Innenraum des hohlen Kopfteils zumindest im Wesentlichen kreiszylindrisch ausgebildet und weist im Übergangsbereich zwischen dem Kopfteil und dem Schaftteil zumindest im Wesentlichen eine halbsphärische Form auf, dessen Radius mit seinem Fußpunkt an der mittleren Längsachse des Funktionselements liegt und zumindest im Wesentlichen gleich groß ist wie der Radius des zylindrischen Innenraums des Kopfteils.

Ferner ist die Wanddicke des gerundeten bzw. sphärisch geformten Übergangs vom Kopfteil in das Schaftteil zumindest im Wesentlichen konstant. Diese Wanddicke des gerundeten bzw. sphärisch gerundeten Übergangs vom Kopfteil in das Schaftteil entspricht zumindest im Wesentlichen der Wanddicke des hohlen Kopfteils in dessen zylindrischem Bereich, ohne die radiale Höhe von etwaigen zur Verdrehsicherung vorgesehenen Merkmalen wie Verdrehsicherungsrippen oder -Vertiefungen zu berücksichtigen.

Diese bevorzugte Ausbildung des Übergangs vom Schaftteil in das Kopfteil tragen ebenfalls zur Lösung der erfindungsgemäßen Aufgabe bei, d.h. sie alle helfen eine unerwünschte Verformung des Kopfteils bei der Anbringung des Funktionselements an ein Blechteil auszuschließen.

Das Schaftteil am dem Kopfteil abgewandten Ende kann eine Kugelform aufweisen, dessen Radius größer ist als der des Schaftteils. Hierdurch wird ein Kugelbolzen realisiert, der durch den vergrößerten Durchmesser des Ringfalzes bzw. des Nietbördels einen besonders guten Ausknöpfwiderstand aufweist, eine Eigenschaft, die bei einem Kugelbolzen besonders wichtig ist. Selbst wenn ein Kugelbolzen normalerweise keinen ausgeprägten Verdrehkräften ausgesetzt ist, da diese im Prinzip nur über Reibung entstehen können, gelingt es mit dem vergrößerten Durchmesser des Ringfalzes und des Nietbördels auf jeden Fall einen ausreichenden Verdrehwiderstand zu erreichen.

Das Funktionselement muss aber nicht als Kugelbolzen realisiert werden, stattdessen kann das Schaftteil mit einem Außengewinde oder mit Verrastungsmerkmalen zur Aufnahme eines darauf gesteckten Clips ausgebildet werden. Auch käme eine hohle Ausbildung des Schaftteils mit einem Innengewinde in Frage.

Bei solchen Ausführungsformen, insbesondere solchen mit einem Außengewinde oder einem Innengewinde, kann die Mantelfläche des Kopfteils mit Verdrehsicherungsmerkmalen, wie z.B. Längsrippen und/oder Längsnuten, versehen werden, die zu einem erhöhten Verdrehsicherungswiderstand führen.

Die Ausbildung des Funktionselements gemäß den Ansprüchen 9 bis 11 ermöglicht es einerseits das Funktionselement selbststanzend auszuführen, d.h. so, dass das Element selbst sein Loch im Blechteil bei der Anbringung an das Blechteil stanzt, und sorgt andererseits für die erwünschte erfindungsgemäße Ausbildung des Nietbördels und des Ringfalzes.

Das erfindungsgemäße Funktionselement kann als Kaltschlagteil aus Draht- oder Stabmaterial ausgebildet werden. Es kann aber auch aus Rohrmaterial angefertigt werden, wenn ein hohles Schaftteil erwünscht ist. Dabei kann ein etwaig vorhandenes Gewinde am Schaftteil durch ein Gewindewalzverfahren oder durch ein Druckumformverfahren hergestellt werden. Verrastungsmerkmale können auch in einem Walzverfahren oder Umformverfahren am Schaftteil erzeugt werden.

Weiterhin lässt sich das Funktionselement nicht nur durch Kaltschlagen, sondern auch durch Hochdruckformverfahren aus Rohrlängen kostengünstig herstellen. Darüber hinaus kommen andere, preisgünstige Herstellungsverfahren in Frage. Obwohl für die Anbringung des Teils an einem Werkstück nur ein hohles Kopfteil erforderlich ist, kann das Funktionselement durchaus insgesamt als rohrförmiges Teil hergestellt werden. Auch die Herstellung mit einem größeren Innendurchmesser im hohlen Kopfteil als im Schaftteil lässt sich kostengünstig realisieren, vor allem dann, wenn als Ausgangsmaterial ein Rohr verwendet wird.

Wie oben angedeutet wird mit der vorliegenden Erfindung der eigentliche Flansch erst nachträglich gebildet. Dadurch, dass das Blechteil formschlüssig innerhalb einer relativ großflächigen Aufnahme zwischen dem Nietbördel einerseits und dem Ringfalz andererseits eingeklemmt ist, weist das Funktionselement nach der Erfindung einen guten Widerstand gegen Verdrehung auf. Die Ausführungsvariante, bei der der Stanzbutzen innerhalb des Nietbördels eingeklemmt wird, erhöht die Verdrehsicherheit noch weiter und steigert außerdem den Ausziehwiderstand.

Sollte es notwendig sein, die Verdrehsicherheit noch weiter zu erhöhen, kann dies auf verschiedene Weise erfolgen. Einerseits können kleinere Verdrehsicherungsmerkmale wie Rillen oder Nasen im Bereich des das Nietbördel bildenden Bereiches des Kopfteils vorgesehen werden. Andererseits können sich radial erstreckende Nasen entweder in der Matrize zur Ausbildung des Nietbördels und/oder in der Stirnfläche des den Ringfalz bildenden Stempels vorgesehen werden, die dann auch zu einer gegenseitigen Verformung des Blechteils und der anliegenden Bereiche des Nietbördels und/oder des Ringfalzes führen und der Erhöhung der Verdrehsicherheit dienen.

Ferner können entsprechend der EP-A-1 609 561 vor der Anbringung des Funktionselements im Blechteil Verdrehsicherungsmerkmale im Sinne einer Blechvorbereitung eingeprägt werden, die bei Anbringung des Funktionselements zu einer entsprechenden lokalen Prägung des Ringfalzes und/oder des Nietbördels führen, wodurch die Verdrehsicherheit erhöht wird.

Es ist auch möglich die Oberfläche des Ringfalzes mit scharfen, sich radial erstreckenden Nasen oder dergleichen auszustatten, die für einen elektrischen Kontakt zu einer Anschlussklemme führen. Solche Nasen können entweder an der Außenfläche des Kopfteils vor dem Einbringen des Elementes vorgesehen werden oder erst nachträglich bei der Ausbildung des Ringfalzes in der freiliegenden Oberfläche des Ringfalzes mittels einer entsprechenden Formgebung der Stirnseite des Stempel ausgebildet bzw. eingeprägt werden.

Besondere Vorteile und bevorzugte Ausführungsformen des Funktionselementes sowie des Verfahrens zum Einbringen des Elementes in ein Blechteil, des so hergestellten Zusammenbauteils, der zur Herstellung des Zusammenbauteils verwendeten Matrize und der verwendeten Stempelanordnung lassen sich den Patentansprüchen und der nachfolgenden Beschreibung entnehmen.

Die Erfindung wird nachfolgend näher anhand von Ausführungsbeispielen und unter Bezugnahme auf die beigefügten Zeichnungen erläutert, in der zeigen:
- Fig. 1A: eine in Längsrichtung teilweise geschnittene Ansicht eines Funk- tionselementes in Form eines Bolzenelementes,
- Fig. 1B: eine Draufsicht auf die Stirnseite des Kopfteils des Bolzenele- ments der Fig. 1A,
- Fig. 2A, 2B: Zeichnungen entsprechend den Fig. 1A bzw. 1B, jedoch von einem erfindungsgemäßen Element in Form eines Kugelbolzens,
- Fig. 3A: der erste Schritt bei der Einbringung des erfindungsgemäßen Funktionselementes in ein dünnes Blechteil,
- Fig. 3B, 3C, 3D: Zwischenstadien bei der Einbringung des Funktions- elementes in ein Blechteil,
- Fig. 3E: das Ende des Einbringungsverfahrens vor Öffnung der dazu verwendeten Presse bzw. Zange,
- Fig. 4: eine Darstellung entsprechend der Fig. 3E, jedoch bei der An- bringung des Funktionselements an ein dickes Blechteil,
- Fig. 5A bis 5D: Darstellungen zur Erläuterung einer möglichen Blechvor- bereitung vor der Anbringung des Funktionselements,
- Fig. 6A, 6B sowie 7A, 7B: eine Darstellung der Anbringung eines erfindungsgemäßen Funktionselements mit einem Kopfteil mit größerem Durchmes- ser als dem des Schaftteils an ein gemäß den Fig. 5A bis 5D vor- bereitetes Blechteil,
- Fig. 8: eine Schnittzeichnung eines Setzkopfes, der zur Anbringung ei- nes erfindungsgemäßen Funktionselements in ein Blechteil ver- wendet werden kann.

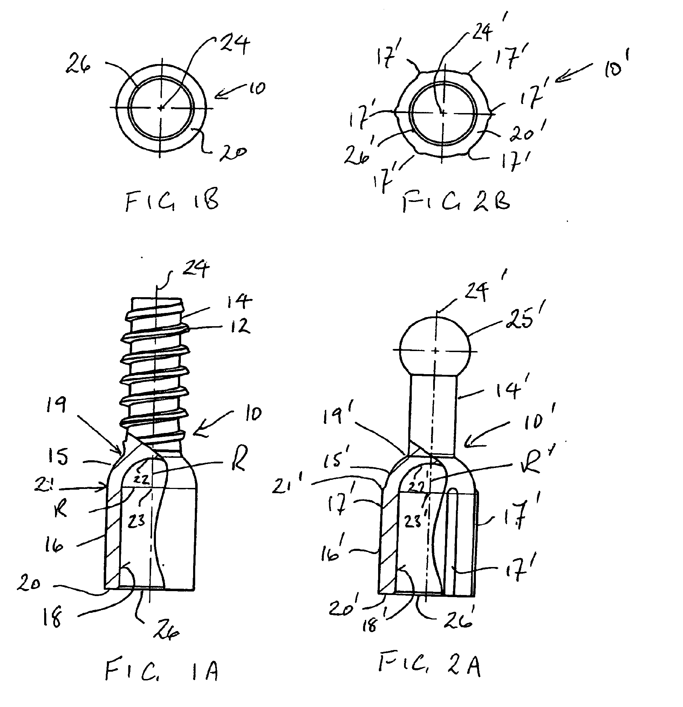

Das Funktionselement 10 der Fig. 1A und 1B besteht aus einem mit einem Außengewinde 12 versehenen Schaftteil 14 und einem hohlen Kopfteil 16 mit einem zum im Vergleich zum Schaftteil größeren Außendurchmesser, d.h. einem Außendurchmesser, der größer ist als der Außendurchmesser des Gewindezylinders des Schaftteils 14. Das hier gezeigte Gewinde hat eine gesonderte Gewindeform, die für untergeordnete Schraubverbindungen verwendet werden kann, beispielsweise für die manuelle oder automatische Anschraubung eines Clips, z.B. aus Kunststoff. Auch ein vollwertiges Gewinde, z. B. nach DIN, ist möglich.

Innerhalb des hohlen Kopfteils 16 befindet sich ein kreiszylindrischer Hohlraum 18, der von dem dem Schaftteil 14 abgewandten Stirnende 20 des Kopfteils 16 bis unmittelbar unterhalb des Gewindezylinders führt und dort in einer hier durchgehenden Querwand 22 endet. Der Hohlraum 18 hat hier die Form einer Bohrung. Die Querwand 22 ist hier durch eine halbsphärische Fläche gebildet, könnte aber eine andere konkave Form aufweisen, beispielsweise eine Konusform. Der Hohlraum und die Querwand können beispielsweise mittels eines Kaltschlagverfahrens hergestellt werden. Die Längsachse des Funktionselements 10, das hier als Bolzenelement realisiert ist, ist mit 24 bezeichnet.

Das Element 10 weist am Stirnende 20 eine innere Schneidfläche 26 auf, die hier in eine Ringfläche übergeht, die die Stirnseite des Kopfteils bildet und hier in einer Ebene senkrecht zur Längsachse 24 liegt. Stattdessen könnte die Stirnseite mit einer äußeren abgerundeten Stoß- und Ziehkante versehen werden, genauso wie das entsprechende Stirnende des Stanz- und Nietabschnittes des Funktionselementes gemäß der DE-PS 34 47 006 C2, vorzugsweise jedoch entsprechend der EP-B-1 430 229.

In Fig. 1 ist die Schneidfläche 26 relativ klein ausgebildet, was nicht zwingend erforderlich ist, jedoch bevorzugt wird.

Eine Besonderheit des Funktionselements gemäß der Fig. 1 liegt darin, dass das Schaftteil 14 über eine durch eine konvex gerundete Fläche 15 gebildete Ringschulter in das Kopfteil 16 übergeht, und zwar derart, dass die konvex gerundete Fläche 15 sich vom Schaftteil 14 bis zu der zumindest im Wesentlichen zylindrischen Mantelfläche des Kopfteils 16, d.h. zwischen den Stellen 19 und 21 erstreckt. Dabei ist die konvex gerundete Fläche 15 zumindest im Wesentlichen eine sphärische gerundete Fläche. Dies ist allerdings nicht zwangsläufig erforderlich, sondern eine gerundete Fläche, die annähernd sphärisch ist, beispielsweise eine solche, die sich als Rotationskörper mit einer gerundeten Form darstellt, die der gekrümmten Seite eines Sektor einer Ellipse oder eines Ovals entspricht, wäre auch möglich. Es käme hier beispielsweise ein Sektor in Frage, der sich ausgehend von einem kleineren Durchmesser einer Ellipse über etwa 60°, beispielsweise von 270° bis 330° erstreckt oder eine Winkelerstreckung von etwa -30° bis etwa +30° bezogen auf den größeren Durchmesser einer Ellipse hat, vorzugsweise einer Ellipse, bei der das Verhältnis der beiden Durchmesser zueinander D1/D2 ≤ 2 beträgt.

Wie oben zum Ausdruck gebracht, weist der Übergangsbereich des Innenraums 18 des hohlen Kopfteils 16 zwischen dem Kopfteil 16 und dem Schaftteil 14 bevorzugter Weise zumindest im Wesentlichen eine halbsphärische Form auf, dessen Radius R am Fußpunkt 23 an der mittleren Längsachse 24 des Funktionselements liegt und zumindest im Wesentlichen gleich groß ist wie der Radius R des zylindrischen Innenraums des Kopfteils. Auch diese halbsphärische Form kann durch eine halbelliptische oder halbovale Form analog zu der konvexen Fläche 15 ersetzt werden, d.h. die Angaben oben zu der möglichen Formgebung der Fläche 15 gelten im Prinzip auch für die Formgebung des dem Schaftteil zugewandten Endes des Innenraums 18, wobei sich aber hier die Winkelerstreckung von 270° bis 0° oder von 225° bis 315° erstreckt. Besonders günstig ist es (selbst wenn nicht zwingend erforderlich), wenn die Wanddicke des gerundeten bzw. sphärisch gerundeten Übergangs vom Kopfteil in das Schaftteil zumindest im Wesentlichen konstant ist.

Die Fig. 2A und 2B zeigen ein Funktionselement 10', das dem Funktionselement 10 der Fig. 1A ähnlich ist. In den Fig. 2A und 2B wurden die gleichen Bezugszeichen verwendet wie in den Fig. 1A und 1B, jedoch mit einem zusätzlichen Strich (') und haben auch die gleiche Bedeutung, d.h. dass die Beschreibung der entsprechenden Teile bzw. Formmerkmale, die für die Ausführung der Fig. 1A und 1B gegeben wurde, auch für die Fig. 2A und 2B gilt.

Abweichend vom Funktionselement gemäß Fig. 1A weist das Kopfteil 16' des Funktionselements 10' in Längsrichtung verlaufende Verdrehsicherungsrippen 17' auf, hier sechs an der Zahl, wobei dies nicht kritisch ist. Anstatt sechs Verdrehsicherungsrippen 17' könnte beispielsweise eine beliebige Zahl zwischen zwei und vierundzwanzig vorgesehen werden oder auch mehr, wenn diese beispielsweise die Form einer Rändelung aufweisen. Auch können anstelle der Verdrehsicherungsrippen 17' Verdrehsicherungsnuten in der Oberfläche des Kopfteils 16' vorgesehen werden oder abwechselnd Verdrehsicherungsrippen und -nuten. Solche Verdrehsicherungsmerkmale können auch bei der Ausführung gemäß Fig. 1A und 1B vorgesehen werden.

Ferner zeichnet sich das Funktionselement 10' gemäß Fig. 2A und 2B dadurch aus, dass es am Ende des Schaftteils 14' entfernt vom Kopfteil 16' eine Kugelform aufweist, während das Schaftteil 14' hier als zylindrisches Teil ausgebildet ist, d.h. keinen Gewindezylinder aufweist wie bei der Ausführungsform gemäß Fig. 1A und 1B. Es handelt sich demnach um einen Kugelbolzen. Auch andere Varianten sind möglich. Beispielsweise könnten die Ausführungen gemäß den Fig. 1A und 1B und den Fig. 2A und 2B so realisiert werden, dass das Schaftteil 14 und gegebenenfalls auch die Kugel 25' hohl sind. Solche Elemente könnten dann aus Rohrmaterial hergestellt werden.

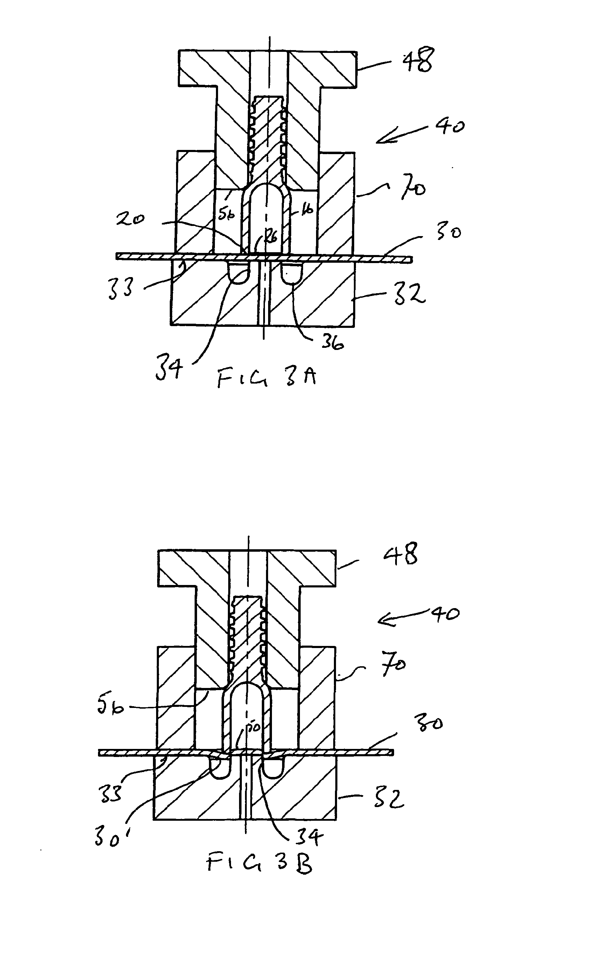

Die Fig. 3A bis 3E zeigen nunmehr verschiedene Stadien bei der Anbringung eines Funktionselements 10 gemäß Fig. 1A und 1B in ein Blechteil 30 mit Hilfe einer Matrize 32 und eines Setzkopfes 40.

Die Matrize 32 befindet sich in einer Bohrung eines nicht gezeigten unteren Werkzeuges einer Presse, deren Oberseite normalerweise bündig mit der Stirnseite der Matrize angeordnet ist. Im unteren Werkzeug um die Matrize 32 herum befinden sich mehrere mittels Federn nach oben vorgespannte Stößel, die das Blechteil 30 bei der Einführung in die Presse abstützen, jedoch aufgrund der von einem nicht gezeigten Niederhalter ausgeübten Kraft beim Schließen der Presse nach unten drückbar sind, so dass das Blechteil 30 an der Stirnseite 33 der Matrize 32 und an der Oberseite des unteren Werkzeuges im Bereich der Matrize zur Anlage kommt und dort zwischen dem Niederhalter und der Matrize 32 bzw. dem unteren Werkzeug unverrückbar geklemmt ist. Es können beispielsweise drei solche federvorgespannte Stößel im unteren Werkzeug vorgesehen werden, die beispielsweise in gleichmäßigen Winkelabständen um die mittlere Längsachse der Matrize 32 angeordnet werden. Die mittlere Längsachse der Matrize ist mit der mittleren Längsachse 24 des Funktionselements 10 ausgerichtet. Das Bezugszeichen 70 deutet hier auf ein gefedertes Nasenstück des den Stempel 48 führenden Setzkopfes und hat ebenfalls eine Niederhalterfunktion in dem Sinne, dass das Blechteil 30 mittels des gefederten Nasenstücks 70 gegen die Stirnfläche 33 der Matrize 32 gedrückt wird.

Die Matrize 32 ist mit einem mittig angeordneten zylindrischen Stempelansatz 34 ausgestattet, der ähnlich dem Stempelansatz der entsprechenden Matrize gemäß der DE-PS 34 47 006 C2 ausgelegt ist, jedoch hier in der Ebene der Stirnseite 33 der Matrize liegt. Dieser Stempelansatz 34 ist von einer im Bodenbereich gerundeten Ringeinsenkung 36 umgeben, die in die dem Blechteil 30 zugewandte Ringfläche übergeht, die in der Stirnseite 33 der Matrize vorgesehen ist. Insgesamt ist die Matrize 32 der in der DE-PS 34 47 006 beschriebenen Matrize 180 ähnlich.

Fig. 3A zeigt den Zustand, nachdem das Blechteil 30 in die Presse eingeführt wurde und die Schließbewegung der Presse begonnen hat, und zwar gerade so weit, dass der Niederhalter 70 und die Stirnseite 20 des Funktionselements 20 auf der Oberseite des Blechteils 30 anliegen und das Blechteil zwischen sich und der Matrize 32 leicht klemmen.

Im Stadium des Verfahrensschrittes gemäß Fig. 3B hat das Stirnende 20 des Funktionselementes unter dem Druck des Stempels 48, der gegen den oberen Bereich der konvex gerundeten Fläche drückt und in seiner Form diesem angepasst ist, das Blechteil teilweise in die Ringvertiefung 36 der Matrize 32 hineingedrückt und eine flache, in etwa konusförmige Vertiefung 30' im Blechteil 30 gezogen. Im Stadium der Fig. 3B hat der Stempelansatz 34 ferner in Zusammenarbeit mit der Schneidfläche 26 am Stirnende des Kopfteils 16 des Funktionselements 10 einen Stanzbutzen 50 aus dem Blechteil herausgeschnitten.

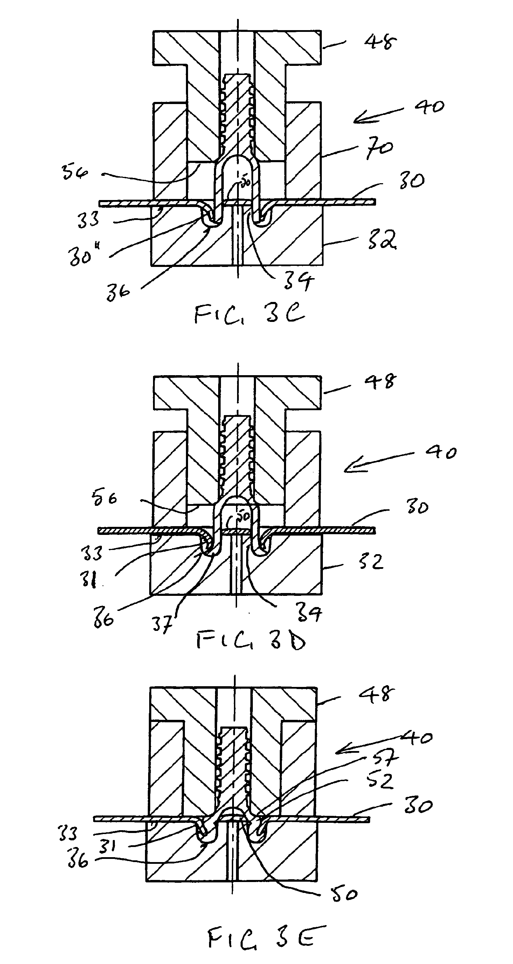

Aus der Fig. 3C, die den Zustand nach einer weitergehenden Schließbewegung der Presse als Fig. 3B zeigt, ist ersichtlich, dass die konusförmige Vertiefung 30" des Blechteils gegenüber der konusförmigen Vertiefung 30' gemäß Fig. 2B nunmehr deutlich tiefer gezogen ist und dass sich die Stirnseite des Funktionselements 10 durch das Kopfteil 16 des Funktionselements 10 aufgeweitete Loch im Blechteil hindurch geschoben hat, und zwar so, dass die konusförmige Schneidfläche 26 an die gerundete Bodenfläche der Ringeinsenkung 36 gelangt ist, wodurch im anschließenden Stadium gemäß Fig. 3D das zylindrische Kopfteil an der Stirnseite 30 ringförmig nach außen "gerollt" bzw. umgebördelt wird.

Aus Fig. 3D ist auch ersichtlich, dass der Stempel 48 gegenüber Fig. 3C weiter nach unten gefahren ist, wobei der freie Endbereich des hohlen Kopfteils des Elementes 10 aufgrund der gerundeten Ringeinsenkung bzw. Rollfläche 36 in der Matrize um den nach unten gezogenen Rand der Lochung des Blechteils herum zu einem anfänglich ringförmigen Nietbördel 37 geformt ist. Das Loch im Blechteil weist in diesem Stadium des Verfahrens einen Lochrand 31 auf, der der Mündung einer Trompete ähnelt.

Im weiteren Verlauf der nach unten gerichteten Bewegung des Stempels 48 wird gemäß Fig. 3E die Wand des Kopfteils 16 im Bereich der gerundeten Fläche und der dieser benachbart angeordneten zylindrischen Wand unmittelbar unterhalb des Schaftteils 14 so gestaucht, dass sich ein Ringfalz 52 bildet. Den Zwängen, denen das Funktionselement 10 aufgrund der Führung durch den Stempel 42 einerseits und durch den Lochrand 31 und den Stanzbutzen 50 andererseits sowie durch die Form der Ringeinsenkung 36 unterliegt, stellen sicher, dass die Verformung so abläuft wie in Fig. 3A bis 3E gezeigt. Das Nietbördel 37 hat nunmehr in Fig. 3E seine endgültige Form erreicht.

Man merkt hier, dass mit einem verhältnismäßig dünnen Blechteil, d.h. eine Blechdicke im Bereich zwischen etwa 0,6 mm und 1,8 mm, der Lochrand 31 eine annähernd konusförmige Gestaltung aufweist und zwischen dem Nietbördel 37 und dem Ringfalz 52 geklemmt ist, wobei die Ringfläche 57 oberhalb des Ringfalzes in der Ebene der Oberseite des Blechteils 30 liegt. Gegebenenfalls kann der Stempel einen kleinen axialen Ringvorsprung, beispielsweise mit einer axialen Höhe von 0,02 mm, in diesem Bereich aufweisen, um sicherzustellen, dass die Ringfläche nicht oberhalb der Oberseite des Blechteils vorsteht, sondern gegenüber dieser geringfügig zurückversetzt ist.

Gegebenenfalls kann die Nase 56 des Stempels 48 im Bereich der Anlagefläche mit der gerundeten Fläche mit formgebenden Merkmalen ausgestattet werden, die einerseits zu einer gewünschten, der Verdrehsicherheit förderlichen, verhakten Anordnung zwischen dem Blechteil 30 und dem hohlen Kopfteil 16 führt, andererseits aber auch so ausgeführt werden kann, dass beispielsweise Nasen in der in Fig. 3E oberen Ringfläche des Ringfalzes 52 entstehen, die für einen hochwertigen elektrischen Kontakt sorgen, beispielsweise wenn das Funktionselement als Masseanschlusselement benutzt wird. Alternativ oder ergänzend zu dieser Art der Realisierung der Verdrehsicherheit kann das Element mittels eines Klebers mit dem Blechteil verklebt werden. Beispielsweise kann das Funktionselement 10 im Bereich des Kopfteils 16 mit einem Trockenkleber beschichtet werden, der erst unter Druck bei der Anbringung des Funktionselements an das Blechteil aktiviert wird.

Im Stadium der Fig. 3E ist das Einbringen des Funktionselements 10 in das Blechteil 30 fertig. Die Presse öffnet sich und das so erzeugte Zusammenbauteil weist dann die Form auf, die aus Fig. 3E ersichtlich ist.

In dieser Beschreibung wird zunächst davon ausgegangen, dass es sich bei der Matrize 32 um eine Matrize handelt, die im unteren Werkzeug einer Presse angeordnet ist. In diesem Fall wird der Setzkopf 44 entweder am oberen Werkzeug der Presse oder auf einer Zwischenplatte der Presse befestigt. Die Matrize 32 kann aber genauso gut auf der Zwischenplatte angeordnet werden und dann mit einem Setzkopf zusammenarbeiten, der am unteren oder oberen Werkzeug der Presse angeordnet ist. Ebenso ist es möglich, die Matrize 32 in der oberen Platte des Werkzeuges anzubringen und den Setzkopf an einer Zwischenplatte oder am unteren Werkzeug der Presse zu montieren. Darüber hinaus können der Setzkopf 40 und die Matrize 32 von einem Roboter aufeinander zu gedrückt werden oder durch anderweitige Vorrichtungen wie eine kraftbetätigte Zange zusammengebracht werden.

Man merkt auch aus der Fig. 3E, dass der Stanzbutzen 50 die mittlere Passage des hohlen Funktionselements 10 im Bereich des Nietbördels 37 schließt, so dass an dieser Stelle die Nietverbindung des Funktionselements 10 zu dem Blechteil 30 verstärkt wird.

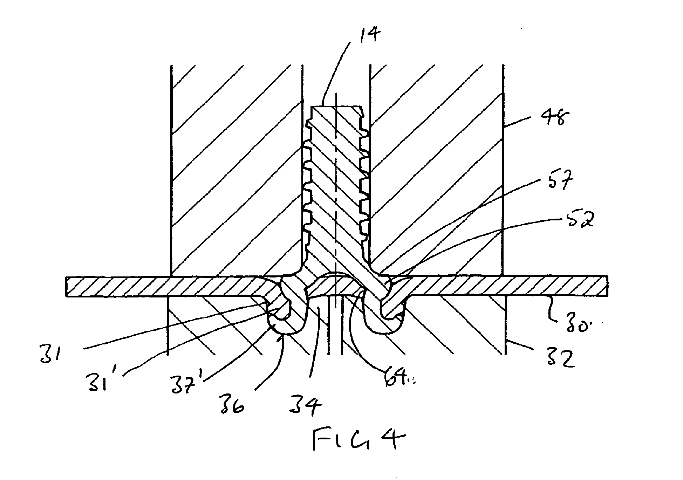

Bei Verwendung eines dickeren Blechteils, beispielsweise ab etwa 1,8 mm, zeigt sich das in der Presse fertig gestellte Zusammenbauteil gemäß Fig. 4 leicht anders als in Fig. 3E gezeigt.

Gemäß Fig. 4 ist das Blechteil 30 im Bereich des im Allgemeinen konusförmigen Lochrandes 31 etwas mehr verformt, so dass ein verdickter Bereich 31' in dem im Allgemeinen U-förmigen Nietbördel 37' eingefasst ist. Die Funktion und Qualität der Verbindung ist aber genauso gegeben wie bei der Ausführungsform gemäß Fig. 3A bis 3E.

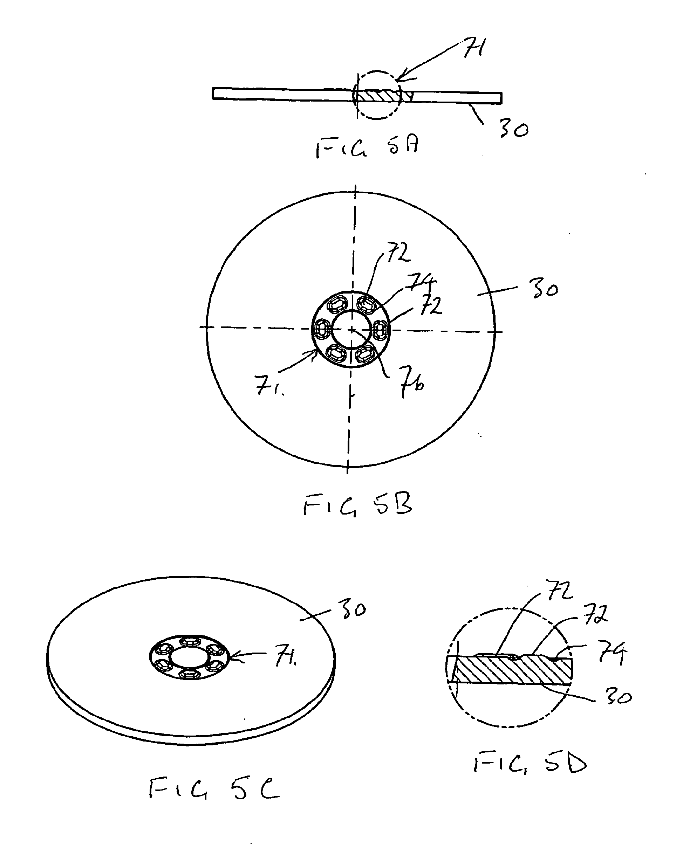

Die Fig. 5A bis 5D zeigen eine mögliche Blechvorbereitung, die insbesondere dann von Bedeutung ist, wenn ein Element wie Fig. 1A bzw. 1B oder ein Element gemäß Fig. 2A bzw. 2B ohne Verdrehsicherungsmerkmale verwendet wird (obwohl die Verwendung eines Funktionselements mit Verdrehsicherungsmerkmalen nicht ausgeschlossen ist), da die Blechvorbereitung gemäß Fig. 5A bis 5D selbst zu einer zusätzlichen Verdrehsicherung führt.

Im Grunde genommen wird gemäß den Fig. 5A bis 5D ein Blechteil 30, hier in Form einer runden Scheibe, aber eigentlich mit jeder beliebigen Form, im Rahmen einer Blechvorbereitung besonders geprägt, um Verdrehsicherungsmerkmale im Blechteil zu erzeugen, d.h. die Verdrehsicherungsmerkmale im Blechteil werden entsprechend der europäischen Patentanmeldung mit der Veröffentlichungsnummer EP-A-1 609 561 eingebracht.

Konkret wird das Blechteil mit einer ringförmigen Prägung 71 versehen, die am besten aus der Draufsicht gemäß Fig. 5B bzw. aus der vergrößerten Schnittzeichnung gemäß Fig. 5D (in einer vergrößerten Darstellung entsprechend des kreisförmig umrandeten Bereichs der Fig. 5A) hervorgeht. Diese ringförmige Verprägung besteht in diesem Beispiel aus diskreten länglichen Erhöhungen 72, die jeweils von einer umlaufenden Nut 74 umgeben sind, wobei in diesem Beispiel sechs regelmäßig angeordnete inselförmige Erhöhungen 72 um die mittlere Längsachse 76 des Blechteils angeordnet sind. Das Material für die Materialerhöhungen 72 wird durch Verdrängung des Materials im Bereich der entsprechenden Nuten 74 gewonnen. Das Blechteil wird hier nicht vorgelocht, obwohl die Vorlochung des Blechteils bei allen Ausführungsformen eine mögliche Alternative darstellt.

Die Fig. 6A und 6B zeigen dann wie das Element gemäß Fig. 1A bzw. 1B in das Blechteil eingebracht wird. Dabei sieht man in Fig. 6A das Element oberhalb des Blechteils 30 gemäß Fig. 5A bis 5D und in Fig. 6B das mit dem Blechteil fertig vernietete Element. Die entsprechenden Darstellungen sind teilweise geschnitten in den Fig. 7A und 7B zu sehen, wobei der Verfahrensablauf dem bereits beschriebenen Verfahrensablauf im Bezug auf die Fig. 3A bis 3E entspricht und das Blechteil 70 hier als dickes Blechteil zu verstehen ist, weshalb die Darstellung gemäß Fig. 7B mit der entsprechenden Darstellung gemäß Fig. 4 beinahe identisch ist, bis auf die Tatsache, dass die Prägungen 72, 74 im Blechteil 30 zu entsprechenden komplementären Prägungen im Blechteil im unteren Bereich des Ringfalzes 52 geführt haben, wodurch eine erhöhte Verdrehsicherheit erreicht wird.

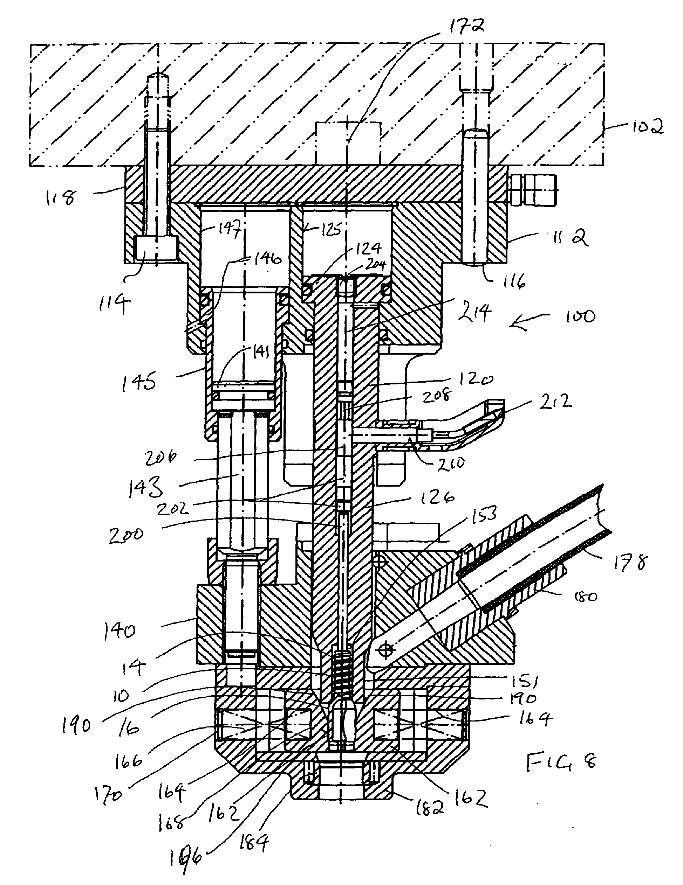

Die Fig. 8 zeigt schematisch wie Elemente gemäß Fig. 1A bzw. 1B mittels eines Setzkopfes 122 in einer industriellen Fertigung dem Blechteil zugeführt werden können. Dabei entspricht der Setzkopf 100 gemäß Fig. 8 in etwa dem Setzkopf, der im europäischen Patent 755 749 gezeigt ist. Da der Setzkopf dort im Detail beschrieben ist, reicht es hier aus, nur die wesentlichen Teile des Setzkopfes kurz zu beschreiben.

Die in Fig. 8 gezeigte Führungs- und Setzeinrichtung 100 weist ein Befestigungsgehäuse 112 auf, welches über Schrauben 114 und Passstifte 116 am oberen Werkzeug 102 der Presse befestigt ist. Das Befestigungsgehäuse 112, welches einen Deckel 118 aufweist, dient einerseits der Führung eines Stempels 120 am oberen Werkzeug 102, wirkt andererseits aber als Führung für den eigentlichen Setzkopf 122. Der Stempel 120 weist einen oberen Abschnitt 124 großen Durchmessers und einen unteren, ebenfalls zylindrischen Abschnitt 126 kleineren Durchmessers auf. Der obere Bereich 124 des Stempels ist als Kolben ausgebildet und wird pneumatisch durch Druck im Zylinder 125 nach unten vorgespannt. Der Zylinder125 wird durch den Deckel 118 abgeschlossen. Der im Wesentlichen zylindrische Unterteil 126 des Stempels wird im Führungsstück 140 des Setzkopfes 122 gleitbar geführt, und das Führungsstück 140 ist selbst über einen Kolben 141 mit Kolbenstange 143 in einem Zylinder 145 gleitbar geführt, der selbst als Kolben 146 in einer Bohrung 147 des Befestigungsgehäuses 112 gleitbar geführt ist. Beide Kolben 141 und 146, die eine teleskopische Anordnung bilden, sind pneumatisch nach unten vorgespannt.

Der untere Abschnitt 151 des Stempels 120 weist einen im Vergleich zu dem Abschnitt 126 kleineren Durchmesser auf und hat eine zylindrische Öffnung 153, die bemessen ist, um das Schaftteil 14 des Funktionselements 10 aufzunehmen. Der Kopfteil 16 des Funktionselements 10 ragt zwischen zwei sich innerhalb des Führungsstücks befindlichen Haltegliedern bzw. Haltefingern 162. Es ist zu erkennen, dass jeder Haltefinger 162 eine zylindrische Bohrung 164 aufweist, welche jeweils eine schematisch angedeutete Schraubendruckfeder 166 aufnimmt, die mit ihrem einen Ende an einem Ende 168 der Bohrung 164 und an ihrem anderen Ende an einer jeweiligen Abdeckplatte 170 des Führungsstücks 140 abgestützt ist und auf diese Weise den jeweiligen Haltefinger 162 in Richtung auf das Element 10 zu vorspannt.

Obwohl hier nicht gezeigt, können jeweilige Zentrierstifte koaxial zu den Federn 166 angeordnet werden, so dass die Zentrierstifte durch entsprechende Bohrungen in den Haltefingern hindurchragen und das Funktionselement 10 zentrieren und die Haltefinger führen. Die Enden der Zentrierstifte würden dann einen Abstand voneinander entsprechend dem Durchmesser des Kopfteils 16 des Funktionselements aufweisen, so dass die Elemente, die in das Führungsstück eingesetzt werden, dort von den Zentrierstiften zentriert werden.

Obwohl in diesem Beispiel lediglich zwei Haltefinger 162 gezeigt sind, könnten auch weitere Haltefinger vorgesehen werden, falls dies erwünscht ist.

Die im hohlen Führungsstück 140 linear verschiebbaren Haltefinger 162, welche senkrecht zur mittleren Längsachse 172 des Stempels 120 verschiebbar sind, sind so angeordnet, dass die mit der Führungs- und Setzeinrichtung 100 zu handhabenden Elemente 10 durch den Zuführkanal 178 mit ihrem zylindrischen Kopfteil 16 voran zwischen den Haltefingern 162 in die Position nach Fig. 8 hineingleiten können, jedoch nur einzeln und nur dann, wenn der Stempel 120 im Vergleich zu Fig. 8 durch die Anbringung eines entsprechenden Drucks unterhalb des Kolbens 124 nach oben vorgespannt ist.

Der hier durch einen Schlauch gebildete Zuführkanal 178 ist über ein Mundstück 180 am Führungsstück 140 befestigt. Es kann sich bei dem Teil 178 auch um ein Magazin handeln, das beispielsweise mit einer beschränkten Anzahl von Befestigungselementen gefüllt ist. Das dem Nasenstück 70 der Fig. 3A bis 3E entsprechende Mund- oder Nasenstück 182 des Führungsstücks 140 kann mit einem nachgiebigen Einsatz 184, beispielsweise aus Polyurethan, versehen werden, um eine klemmende Wirkung auf das Kopfteil 16 des Funktionselements auszuüben, wenn dieses durch das Mundstück 182 bzw. dem ringförmigen Einsatz 184 hindurch geschoben wird. Diese klemmende Wirkung bewirkt nicht nur eine Führung des Funktionselements 10, sondern verhindert auch, dass dieses durch das Mundstück 182 hindurch fällt, wenn die Haltefinger 162 geöffnet bzw. aufgesteuert werden.

Die Haltefinger 162 verfügen über eine Steuerkante bzw. eine Steuerfläche 190, über die sie durch den Abschnitt 151 des verschiebbar angeordneten Stempels 120 aufgesteuert werden. Während dieser Aufsteuerbewegung bewegen sich die Haltefinger 162 parallel zur mittleren Längsachse der Bohrungen 164. Bei dieser Bewegung der Haltefinger 162 ist die Position etwaige Zentrierstifte bezüglich des Führungsstücks 140 starr.

Die Bewegung erfolgt gegen die Kraft der Federn 166, die die Haltefinger in ihre vorher durch Anschläge begrenzte Endlage zu schieben versucht. An den Haltefingern 162 sind außerdem Klemmflächen 196 ausgebildet, über die das jeweilige Funktionselement 10 nach dem Öffnen der Haltefinger kraftschlüssig gehalten werden kann. Hierzu wird die Kraft der die Haltefinger 162 schließenden Feder 166 verwendet.

Ausgehend von der Stellung gemäß Fig. 8 wird die Presse geschlossen. Sobald die Stirnseite des Mundstücks 182 auf das Blechteil trifft und dieses gegen die Matrize drückt, fängt das Führungsteil 140 gegenüber dem oberen Werkzeug 102 an zurück zu weichen, und zwar bis die obere Stirnseite des Kolbens 124 an den Deckel 118 gelangt. Durch eine weitere Schließbewegung der Presse weicht das Führungsteil 140 des Setzkopfes gegenüber dem oberen Werkzeug noch weiter zurück, wobei der Stempel 120, der nicht mehr zurückweichen kann, die Haltefinger 162 aufsteuert und das Funktionselement und zwischen diesen und durch das Mundstück 182 hindurch schiebt, so dass das Funktionselement 10 entsprechend den Fig. 3A bis 3E in das Blechteil hineingebracht und mittels einer Matrize (in Fig. 8 nicht gezeigt, jedoch der Matrize 32 entsprechend) in diesem vernietet wird.

Die entsprechende zurückweichende Bewegung des Führungsteils 140 ist durch die teleskopische Ausführung der Kolben 141 und 146 sowie die geometrische Auslegung des Setzkopfes möglich.

Bei der anschließenden Öffnungsbewegung der Presse werden aufgrund der pneumatischen Vorspannung zunächst die Kolben 141 und 146 ausgefahren während der Stempel 120 durch einen entsprechenden Druck unterhalb des Kolbens 124 in Berührung mit dem Deckel 118 verbleibt. Dies bedeutet, dass das untere Ende des Stempels 120 soweit gegenüber dem Führungsstück 140 angehoben ist, dass ein neues Funktionselement 10 unterhalb des Stempels 120 in den Führungskanal eingebracht werden kann, beispielsweise mittels eines Luftstoßes, wonach die pneumatische nach unten gerichtete Vorspannung des Stempels 120 aktiviert wird und dazu führt, dass dieser sich in die Stellung gemäß Fig. 8 bewegt. Das neue Funktionselement 10 kann anschließend in ein neues Blechteil durch Wiederholung des bereits beschriebenen Verfahrens eingebracht werden. Das Bezugszeichen 200 deutet auf einen Steuerstift hin, der das Vorhandensein eines Funktionselements 10 abtastet und nur dann über eine pneumatische und/oder mechanische und/oder elektrische Steuerung, die durch den Stift 200 angesteuert wird, eine weitere Schließbewegung der Presse zulässt. Konkret deutet das Bezugszeichen 204 auf eine Madenschraube, die den Kanal im Stempel 120 verschließt. Oberhalb des Stiftes 200 befindet sich ein Stift 202 größeren Durchmessers mit einem unteren metallischen Abschnitt 206, beispielsweise aus einer Fe-Legierung, und einem oberen, nicht leitenden Abschnitt 208, beispielsweise aus Kunststoff. Das Bezugszeichen 210 deutet auf einen Näherungssensor, der bei angehobenem Stift 200, was auf das Vorhandensein eines Funktionselements 10 hinweist, durch den metallischen Bereich 206 des Stiftes 202 gedämpft wird und somit feststellt, dass ein Funktionselement innerhalb des Hohlraums 153 vorhanden ist. Wenn dies zutrifft, wird über die Leitung 212 ein Steuersignal an die Pressensteuerung gegeben, wodurch der nächste Hub der Presse ausgelöst wird. Falls kein Funktionselement 10 vorhanden ist, d.h. der isolierende Bereich 208 befindet sich vor dem Näherungssensor, gibt der Näherungssensor kein Signal ab, da er nicht mehr gedämpft ist. Dieser Zustand tritt ein, wenn sich kein Funktionselement unterhalb bzw. innerhalb des Hohlraums 153 des Stiftes 126 befindet, da die im Hohlraum 214 unterhalb der Madenschraube 204 angeordnete Schraubendruckfeder den Stift 202 und den Stift 200 nach unten drückt. Wenn der Näherungssensor kein Signal abgibt oder ein Signal abgibt, wonach kein Funktionselement vorhanden ist, wird die Presse so lange angehalten, bis der Fehler behoben ist.

Die hier beschriebenen Funktionselemente können zum Beispiel aus allen Materialien hergestellt werden, die die Festigkeitsklasse 5.6 erreichen. Solche Metallwerkstoffe sind üblicherweise Kohlenstoffstähle mit 0,15 bis 0,55 % Kohlenstoffgehalt.

Bei allen Ausführungsformen können auch als Beispiel für den Werkstoff der Funktionselemente alle Materialien genannt werden, die im Rahmen der Kaltverformung die Festigungswerte der Klasse 8 gemäß Isostandard erreichen, beispielsweise eine 35B2-Legierung gemäß DIN 1654. Die so gebildeten Befestigungselemente eigenen sich u.a. für alle handelsüblichen Stahlwerkstoffe für ziehfähige Blechteile wie auch für Aluminium oder deren Legierungen. Auch können Aluminiumlegierungen, insbesondere solche mit hoher Festigkeit, für die Funktionselemente benutzt werden, z.B. AlMg5.

Die bisher durchgeführten Versuche haben gezeigt, dass bei Anwendung des Materials 35B2 das Verhältnis der radialen Wanddicke des Kopfteils zum Außendurchmesser des Kopfteils im Bereich zwischen 0,15 bis 0,2 liegt. Höhere Werte sind anstrebbar, da sie die Bruchkräfte bzw. Ausziehkräfte erhöhen. Es muss jedoch sichergestellt werden, dass die Einpresskräfte nicht zu einer unzulässigen Deformation führen.

## Patentansprüche

1. Funktionselement (10; 10'), das für eine Nietverbindung mit einem Tafelelement ausgebildet ist, bestehend aus einem Schaftteil (14; 14') und einem für eine Nietverbindung mit dem Tafelelement (30) ausgelegten, einen Nietabschnitt bildenden Kopfteil (16; 16')), wobei das hohle Kopfteil einen Außendurchmesser größer als der des Schaftteils aufweist und ein Teil des hohlen Kopfteils zur Bildung eines Ringfalzes ausgebildet ist, der als Flansch dient und auf der dem Schaftteil zugewandten Seite des Tafelelements zu liegen kommt, während das freie Stirnende des hohlen Kopfteils zur Bildung eines Nietbördels auf der dem Schaftteil des Elementes abgewandten Seite des Tafelelements umformbar ist,
**dadurch gekennzeichnet, dass** das Schaftteil (14; 14') über eine durch eine konvex gerundete Fläche (15; 15') gebildete Ringschulter in das Kopfteil übergeht, derart, dass die konvex gerundete Fläche (15; 15') sich vom Schaftteil (14; 14') bis zu der zylindrischen Mantelfläche des Kopfteils (16; 16') erstreckt.

2. Funktionselement (10; 10')) nach Anspruch 1, **dadurch gekennzeichnet, dass** die konvex gerundete Fläche (15; 15') zumindest im Wesentlichen eine sphärisch gerundete Fläche ist, die sich als Rotationskörper darstellt.

3. Funktionselement (10; 10') nach einem der vorhergehenden Ansprüche 1 oder 2, **dadurch gekennzeichnet, dass** der Innenraum (18; 18') des hohlen Kopfteils (16; 16') zumindest im Wesentlichen kreiszylindrisch ausgebildet ist und im Übergangsbereich zwischen dem Kopfteil und dem Schaftteil zumindest im Wesentlichen eine halbsphärische Form aufweist, dessen Radius (R; R') mit seinem Fußpunkt an der mittleren Längsachse (24; 24') des Funktionselements liegt und zumindest im Wesentlichen gleich groß ist wie der Radius des zylindrischen Innenraums (18; 18') des Kopfteils.

4. Funktionselement (10; 10') nach einem der vorhergehenden Ansprüche, **dadurch gekennzeichnet, dass** die Wanddicke des gerundeten bzw. sphärisch gerundeten Übergangs vom Kopfteil in das Schaftteil zumindest im Wesentlichen konstant ist.

5. Funktionselement (10; 10') nach Anspruch 4, **dadurch gekennzeichnet, dass** die Wanddicke des gerundeten bzw. sphärisch gerundeten Übergangs vom Kopfteil in das Schaftteil (14; 14') zumindest im Wesentlichen der Wanddicke des hohlen Kopfteils (16; 16') in dessen zylindrischem Bereich entspricht, ohne die radiale Höhe von etwaigen zur Verdrehsicherung vorgesehenen Merkmalen wie Verdrehsicherungsrippen (17') oder -Vertiefungen zu berücksichtigen.

6. Funktionselement (10') nach einem der vorhergehenden Ansprüche, **dadurch gekennzeichnet, dass** das Schaftteil (14') am dem Kopfteil (16') abgewandtem Ende eine Kugelform (25') aufweist, dessen Radius größer ist als der des Schaftteils.

7. Funktionselement (10) nach einem der vorhergehenden Ansprüche, **dadurch gekennzeichnet, dass** das Schaftteil (14) mit einem Außengewinde (12) oder mit Verrastungsmerkmalen zur Aufnahme eines darauf gesteckten Clips ausgebildet ist.

8. Funktionselement (10') nach einem der vorhergehenden Ansprüche, **dadurch gekennzeichnet, dass** die Mantelfläche des Kopfteils (16') mit Verdrehsicherungsmerkmalen, wie zum Beispiel Längsrippen (17') und/oder Längsnuten, versehen ist.

9. Funktionselement (10; 10') nach Anspruch 1, **dadurch gekennzeichnet, dass** das dem Schaftteil (14; 14') abgewandte Stirnende (20; 20') des einen Nietabschnitt bildenden Kopfteils (16; 16') in an sich bekannter Weise mit einer inneren konusförmigen Schneidfläche (26; 26') ausgebildet ist.

10. Funktionselement nach einem der vorhergehenden Ansprüche,
**dadurch gekennzeichnet, dass** das Stirnende des hohlen Kopfteils eine zylindrische Mantelfläche aufweist, die in eine abgerundete Stoß- und Ziehkante übergeht und innen eine konische Schneidfläche aufweist.

11. Funktionselement (10; 10') nach einem der vorhergehenden Ansprüche, **dadurch gekennzeichnet, dass** die Länge des hohlen Kopfteils (16; 16') zusammen mit der axialen Höhe des gerundeten Übergangs zwischen dem Kopfteil und dem Schaft mindestens so bemessen ist, dass sie die Länge eines auf der dem Schaftteil (14; 14') abgewandten Seite eines Tafelelements (30) ausgebildeten Nietbördels (37; 37') plus die Dicke des Tafelelements und die ausgestreckte Länge des auf der dem Schaftteil (14; 14') zugewandten Seite des Tafelelements ausgebildeten Ringfalzes (52) beträgt.

12. Funktionselement nach einem der vorhergehenden Ansprüche,
**dadurch gekennzeichnet, dass** auch das Schaftteil hohl ausgebildet ist und ggf. dass das hohle Schaftteil mit einem Innengewinde versehen ist.

13. Funktionselement nach einem der vorhergehenden Ansprüche,
**dadurch gekennzeichnet, dass** es aus Rohrmaterial angefertigt wird, wobei ein etwaig vorhandenes Gewinde am Schaftteil durch ein Gewindewalzverfahren oder durch ein Druckumformverfahren hergestellt ist.

14. Verfahren zur Herstellung einer Verbindung zwischen einem Funktionselement (10; 10') nach einem der vorhergehenden Ansprüche mit einem Tafelelement (30), wobei in an sich bekannter Weise das Tafelelement durch das Stirnende (20; 20') des Funktionselements bei gleichzeitiger Abstützung des Tafelelements (30) auf einer Matrize (32) durchlocht und zur Ausbildung eines Nietbördels (37; 37') um den nach unten gezogenen Lochrand geformt wird und das Funktionselement (10; 10') nach oder kurz vor Fertigstellung des Nietbördels (37; 37') nach unten gedrückt wird, um einen dem Schaftteil (14; 14') zugewandten Bereich des hohlen Kopfteils (16; 16') zu einem Ringfalz (52) auszubilden, der auf der dem Nietbördel (37; 37') abgewandten und dem Schaftteil (14; 14') zugewandten Seite des Tafelelements (30) anliegt und dass der durch den Stanzabschnitt (26; 26') des Kopfteils (16; 16') ausgebildete Stanzbutzen (50) mittels eines Stempelansatzes (34) der Matrize (32) innerhalb des Nietbördels (37) gezwungen wird, um die Festigkeit der Nietverbindung weiter zu erhöhen.

15. Zusammenbauteil bestehend aus einem Tafelelement (30) und einem Funktionselement (10; 10') nach einem der vorhergehenden Ansprüche 1 bis 13, insbesondere nach dem Verfahren des Anspruchs 14 hergestellt, **dadurch gekennzeichnet, dass** sich auf der dem Schaftteil (14; 14') abgewandten Seite des Tafelelements ein Nietbördel (37; 37') befindet, während sich ein Ringfalz (52) auf der dem Schaftteil (14; 14') zugewandten Seite des Tafelelements (30) befindet, wobei das Tafelelement (30) im Bereich der Verbindung zum Funktionselement (10) zwischen dem Ringfalz (52) und dem Nietbördel (37; 37') geklemmt ist, dass der Ringfalz (52) in einer Ringvertiefung des Tafelelements angeordnet ist, wobei eine dem Schaftteil (14) zugewandte Ringfläche (57) des Ringfalzes (52) entweder geringfügig unterhalb oder geringfügig oberhalb der dem Schaftteil (14) zugewandten Seite des Bleches im Bereich der Nietverbindung angeordnet ist oder auf der gleichen Höhe wie die Seite des Tafelelements (30) liegt, und/oder dass ein Stanzbutzen (50) sich innerhalb des ringförmigen Nietbördels (37; 37') befindet und gegen diesen drückt.

## Claims

1. A functional element (10; 10') which is designed for a rivet connection to a panel element, comprising a shaft part (14; 14') and a head part (16; 16') designed for a rivet connection to the panel element (30) and forming a rivet section, wherein the hollow head part has an outer diameter larger than that of the shaft part and a part of the hollow head part is configured for forming a ring fold which serves as a flange and comes to lie on the side of the panel element facing the shaft part, while the free end face of the hollow head part can be shaped for forming a rivet bead on the side of the panel element remote from the shaft part of the element,
**characterized in that** the shaft part (14, 14') merges via a ring shoulder formed by a convexly rounded surface (15; 15') into the head part such that the convexly rounded surface (15; 15') extends from the shaft part (14; 14') up to the cylindrical jacket surface of the head part (16; 16').

2. A functional element (10; 10') in accordance with claim 1, **characterized in that** the convexly rounded surface (15; 15') is at least substantially a spherically rounded surface which, for example, represents a body of revolution.

3. A functional element (10; 10') in accordance with any one of the preceding claims 1 or 2, **characterized in that** the inner space (18: 18') of the hollow head part (16; 16') is made at least substantially of circular cylindrical shape and has a an least substantially hemispherical form in the transition region between the head part and the shaft part, whose radius (R, R') has its origin on the central longitudinal axis (24; 24') of the functional element and is at least substantially the same size as the radius of the cylindrical inner space (18; 18') of the head part.

4. A functional element (10; 10') in accordance with any one of the preceding claims, **characterized in that** the wall thickness of the rounded or spherically rounded transition from the head part into the shaft part is at least substantially constant.

5. A functional element (10; 10') in accordance with claim 4, **characterized in that** the wall thickness of the rounded or spherically rounded transition from the head part into the shaft part (14; 14') corresponds at least substantially to the wall thickness of the hollow head part (16, 16') in the cylindrical region without the radial height of the any features providing security against rotation, such as ribs (17; 17'), or recesses providing security against rotation being taken into account.

6. A functional element (10') in accordance with any one of the preceding claims, **characterized in that** the shaft part (14') has a spherical shape (25') at the end remote from the head part (16') whose radius is larger than that of the shaft part.

7. A functional element (10) in accordance with any one of the preceding claims, **characterized in that** the shaft part (14) is provided with an external thread (12) or with latching features for the reception of a clip plugged onto it.

8. A functional element (10') in accordance with any one of the preceding claims, **characterized in that** the jacket surface of the head part (16') is provided with features providing security against rotation such as, for example, longitudinal ribs (17') and/or longitudinal grooves.

9. A functional element (10; 10') in accordance with claim 1, **characterized in that** the end face (20, 20') remote from the shaft part (14; 14') of the head part (16; 16') forming a rivet section is made in a manner known per se with an internal conical cutting surface (26; 26').

10. A functional element (10; 10') in accordance with any one of the preceding claims, **characterized in that** the end face of the hollow head part has a cylindrical jacket surface which merges into a rounded punching and drawing surface and has a conical cutting surface at the inside.

11. A functional element (10; 10') in accordance with any one of the preceding claims, **characterized in that** the length of the hollow head part (16; 16') together with the axial height of the rounded transition between the head part and the shaft part is at least so dimensioned that it amounts to the length of a rivet bead (37; 37') formed at the side of a sheet metal part (30) remote from the shaft part (14; 14') and the extended length of the ring fold (52) formed at the side of the sheet metal part adjacent the shaft part (14; 14') plus the thickness of the sheet metal part and the extended length of the ring fold (52) formed on the side of the sheet metal part adjacent the shaft part (14; 14').

12. A functional element (10; 10') in accordance with any one of the preceding claims, **characterized in that** the shaft part is also made hollow.

13. A functional element (10; 10') in accordance with any one of the preceding claims, **characterized in that** it is made of tube material, with any thread present at the shaft part being formed by a thread rolling process or by a pressure shaping process.

14. A method for the manufacture of a connection between a functional element (10; 10') in accordance with any one of the preceding claims with a panel element (30) wherein, in a manner known per se, the panel element is pierced by the end face (20; 20') of the functional element on die button (32) with simultaneous support of the panel element (30) and is shaped to form a rivet bead (37; 37') around the downwardly drawn rim of the hole and the functional element (10; 10') is pressed downwardly after or shortly before the rivet bead (37; 37') is completed in order to form a region of the hollow head part (16; 16') adjacent the shaft part (14; 14') into a ring fold (52) which contacts the side of the sheet metal part (30) remote from the rivet bead (37; 37') and adjacent the shaft part (14; 14'); and in that the piercing slug (50) formed by the piercing section (26; 26') of the head part (16; 16') is forced by means of a plunger projection (34) of the die button (32) inside the rivet bead (37) in order to further increase the strength of the rivet connection.

15. A component assembly consisting of a panel element (30) and a functional element (10; 10')in accordance with any one of the preceding claims 1 to 123, in particular made in accordance with the method of claims 14, **characterized in that** a rivet bead (37; 37') is located at the side of the panel element remote from the shaft part (14; 14') whereas a ring fold (52) is located at the side of the panel element (30) adjacent to the shaft part (14; 14'), with the panel element (30) being clamped in the region of the connection to the functional element (10) between the ring fold (52) and the rivet bead (37; 37'); **in that** the ring fold (52) is arranged in a ring recess of the panel element, with a ring surface (57) of the ring fold (52) adjacent the shaft part (14) either arranged fractionally below or fractionally above the side of the sheet metal part adjacent to the shaft part (14) in the region of the rivet connection or lies at the same level as the side of the panel element (30); and/ **in that** a piercing slug (50) is located within the ring-like rivet bead (37; 37') and is pressed against the latter.

## Revendications

1. Élément fonctionnel (10 ; 10'), qui est réalisé pour une liaison rivetée avec un élément en plaque, composé d'une partie de tige (14 ; 14') et d'une partie de tête (16 ; 16') formant un tronçon de rivet conçu pour une liaison rivetée avec l'élément en plaque (30), dans lequel la partie de tête creuse présente un diamètre extérieur supérieur à celui de la partie de tige, et une partie de la partie de tête creuse est réalisée pour former une feuillure annulaire qui sert de bride et qui vient se placer sur le côté de l'élément en plaque tourné vers la partie de tige alors que l'extrémité frontale libre de la partie de tête creuse est déformable pour former un bourrelet de rivetage sur le côté de l'élément en plaque détourné de la partie de tige de l'élément,
**caractérisé en ce que** la partie de tige (14 ; 14') se transforme dans la partie de tête via un épaulement annulaire formé par une surface arrondie convexe (15 ; 15') de telle façon que la surface arrondie convexe (15 ; 15') s'étend depuis la partie de tige (14 ; 14') jusqu'à la surface enveloppe cylindrique de la partie de tête (16 ; 16').

2. Élément fonctionnel (10 ; 10') selon la revendication 1, **caractérisé en ce que** la surface arrondie convexe (15 ; 15') est au moins sensiblement une surface arrondie sphérique qui est représentée par un corps de révolution.

3. Élément fonctionnel (10 ; 10') selon l'une des revendications précédentes 1 ou 2, **caractérisé en ce que** l'espace intérieur (18 ; 18') de la partie de tête creuse (16 ; 16') et réalisé au moins sensiblement sous forme cylindrique à base circulaire et présente entre la partie de tête et la partie de tige une forme au moins sensiblement hémisphérique dont le rayon (R ; R') tombe à son pied sur l'axe longitudinal médian (24 ; 24') de l'élément fonctionnel et est au moins sensiblement aussi grand que le rayon de l'espace intérieur cylindrique (18 ; 18') de la partie de tête.

4. Élément fonctionnel (10 ; 10') selon l'une des revendications précédentes, **caractérisé en ce que** l'épaisseur de paroi de la transition arrondie ou respectivement arrondie sphérique, de la partie de tête vers la partie de tige, est au moins sensiblement constante.

5. Élément fonctionnel (10 ; 10') selon la revendication 4, **caractérisé en ce que** l'épaisseur de paroi de la transition arrondie ou respectivement arrondie sphérique, de la partie de tête vers la partie de tige (14 ; 14'), correspond au moins sensiblement à l'épaisseur de paroi de la partie de tête creuse (16 ; 16') dans sa région cylindrique, sans tenir compte de la hauteur radiale d'éventuelles caractéristiques prévues pour le blocage antirotation, comme des nervures (17') ou des creux antirotation.

6. Élément fonctionnel (10') selon l'une des revendications précédentes, **caractérisé en ce que** la partie de tige (14') présente à l'extrémité détournée de la partie de tête (16') une forme sphérique (25') dont le rayon est plus grand que celui de la partie de tige.

7. Élément fonctionnel (10) selon l'une des revendications précédentes, **caractérisé en ce que** la partie de tige (14) est réalisée avec un pas de vis extérieur (12) ou avec des caractéristiques d'enclenchement pour la réception d'un clip enfilé sur celle-ci.

8. Élément fonctionnel (10') selon l'une des revendications précédentes, **caractérisé en ce que** la surface enveloppe de la partie de tête (16') est pourvue de caractéristiques de blocage antirotation, comme par exemple des nervures longitudinales (17') et/ou des rainures longitudinales.

9. Élément fonctionnel (10 ; 10') selon la revendication 1, **caractérisé en ce que** l'extrémité frontale (20 ; 20'), détournée de la partie de tige (14 ; 14'), de la partie de tête (16 ; 16') formant un tronçon de rivetage, est réalisée d'une manière connue en elle-même avec une surface de taille intérieure (26 ; 26') de forme conique.

10. Élément fonctionnel selon l'une des revendications précédentes, **caractérisé en ce que** l'extrémité frontale de la partie de tête creuse présente une surface enveloppe cylindrique qui se transforme en une arête de poussée/traction arrondie et présente à l'intérieur une surface de taille conique.

11. Élément fonctionnel (10 ; 10') selon l'une des revendications précédentes, **caractérisé en ce que** la longueur de la partie de tête creuse (16 ; 16') conjointement avec la hauteur axiale de la transition arrondie entre la partie de tête et la partie de tige est dimensionnée au moins de quelle façon qu'elle est égale à la longueur d'un bourrelet de rivetage (37 ; 37') réalisé sur le côté, détourné de la partie de tige (14 ; 14'), d'un élément en plaque (30), plus l'épaisseur de l'élément en plaque et la longueur déployée de la feuillure annulaire (52) réalisée sur le côté de l'élément en plaque détourné de la partie de tige (14 ; 14').

12. Élément fonctionnel selon l'une des revendications précédentes, **caractérisé en ce que** la partie de tige est également réalisée creuse et le cas échéant **en ce que** la partie de tige creuse est pourvue d'un pas de vis intérieur.

13. Élément fonctionnel selon l'une des revendications précédentes, **caractérisé en ce qu'**il est fabriqué à partir d'un matériau tubulaire, de sorte qu'un pas de vis éventuellement prévu sur la partie de tige est réalisé par processus de galetage ou par un processus de déformation sous pression.

14. Procédé pour la fabrication d'une liaison entre un élément fonctionnel (10 ; 10') selon l'une des revendications précédentes avec un élément en plaque (30), dans lequel d'une manière connue en elle-même l'élément en plaque est perforé par l'extrémité frontale (20 ; 20') de l'élément fonctionnel avec soutien simultané de l'élément en plaque (30) sur une matrice (32) et, pour la réalisation d'un bourrelet de rivetage (37 ; 37') l'élément en plaque est déformé autour de la bordure du trou tirée vers le bas, et l'élément fonctionnel (10 ; 10') est poussé vers le bas, après la terminaison du bourrelet de rivetage (37 ; 37') ou brièvement avant, afin de transformer une région de la partie de tête creuse (16 ; 16') tournée vers la partie de tige (14 ; 14') en une feuillure annulaire (52) qui est appliquée sur le côté, de l'élément en plaque (30), détourné du bourrelet de rivetage (37 ; 37') et tourné vers la partie de tige (14 ; 14'), et en ce que la pastille de poinçonnage (50) formée par le tronçon de poinçonnage (26 ; 26') de la partie de tête (16 ; 16') est forcée, au moyen d'un talon de poinçonnage (34) de la matrice (32), à l'intérieur du bourrelet de rivetage (37) afin d'augmenter encore la solidité de la liaison rivetée.

15. Composant assemblé constitué d'un élément en plaque (30) et d'un élément fonctionnel (10 ; 10') selon l'une des revendications précédentes 1 à 13, réalisé en particulier d'après le procédé de la revendication 14, **caractérisé en ce qu'**un bourrelet de rivetage (37 ; 37') est situé sur le côté de l'élément en plaque détourné de la partie de tige (14 ; 14'), alors qu'une feuillure annulaire (52) est située sur le côté de l'élément en plaque (30) tourné vers la partie de tige (14 ; 14'), et l'élément en plaque (30) est coincé dans la région de la liaison vers l'élément fonctionnel (30) entre la feuillure annulaire (52) et le bourrelet de rivetage (37 ; 37'), **en ce que** la feuillure annulaire (52) est agencée dans un renfoncement annulaire de l'élément en plaque, de sorte qu'une surface annulaire (57), tournée vers la partie de tige (14), de la feuillure annulaire (52) est agencée soit légèrement au-dessous soit légèrement au-dessus du côté, tourné vers la partie de tige (14), de la tôle dans la région de la liaison rivetée, ou bien se trouve à la même hauteur que le côté de l'élément en plaque (30), et/ou **en ce qu'**une pastille de poinçonnage (50) se trouve à l'intérieur du bourrelet de rivetage annulaire (37 ; 37') et pousse contre celui-ci.
